# EUROPÄISCHE PATENTSCHRIFT

(11) **EP 4 267 369 B1**
(45) Veröffentlichungstag und Bekanntmachung des Hinweises auf die Patenterteilung: **29.10.2025**
(21) Anmeldenummer: 21844342.2
(22) Anmeldetag: 23.12.2021
(51) Int. Cl.: B29C 49/48, B29C 49/04, B29C 49/50

(54) **FORMKÖRPER FÜR EIN BLASFORMWERKZEUG UND BLASFORMWERKZEUG**
MOULD BODY FOR A BLOW MOULD, AND BLOW MOULD
CORPS DE MOULE POUR UN MOULE DE SOUFFLAGE, ET MOULE DE SOUFFLAGE

(30) Priorität: 28.12.2020 CH 16762020
(43) Veröffentlichungstag der Anmeldung: 01.11.2023
(73) Patentinhaber: ALPLA Werke Alwin Lehner GmbH & Co. KG, 6971 Hard (AT)
(72) Erfinder: OTTOWITZ, Martin, 6971 Hard (AT); PIELMEIER, Daniel, 6971 Hard (AT)
(74) Vertreter: Bohest AG Branch Ostschweiz
(86) Internationale Anmeldenummer: PCT/EP2021/087491
(87) Internationale Veröffentlichungsnummer: WO 2022/144298

(56) Entgegenhaltungen:
- EP-B1- 3 083 190
- EP-B1- 3 083 191
- WO-A1-2020/201063
- CN-A- 112 060 545
- CN-U- 205 969 934
- CN-U- 210 390 079
- DE-A1- 4 327 363
- DE-A1- 4 327 363
- FR-A1- 3 088 234

## Beschreibung

Die vorliegende Erfindung betrifft einen Formkörper für ein Extrusionsblasformwerkzeug und ein Extrusionsblasformwerkzeug umfassend einen Formkörper gemäss dem Oberbegriff der unabhängigen Ansprüche.

Aus dem Stand der Technik sind unterschiedliche Verfahren und Vorrichtungen zum Formen eines Behälters und damit entsprechende Formkörper bekannt.

Die DE 43 27 363 A1, die CN 112 060 545 A und die WO 2020/201063 A1 offenbaren Formkörper nach dem Oberbegriff des Anspruchs l. Die CN 205 969 934 U, die CN 210 390 079 U und die DE 43 27 363 Al offenbaren eine gezielte Kühlung von Butzen.

Die Herstellung von hohlen Kunststoffbehältern geschieht typischerweise durch sogenannte Blasformverfahren. Die gebräuchlichsten Blasformverfahren sind dabei das Extrusionsblasformen und das Streckblasformen. Beide Blasformverfahren haben gemeinsam, dass die finale Form eines Kunststoffbehälters in einem Blasformwerkzeug gegeben wird.

Ein- oder mehrschichtige Kunststoffbehälter beispielsweise aus Polyolefinen werden häufig durch Extrusionsblasformen, insbesondere in einem Schlauchblasverfahren, hergestellt. Dabei wird mit einem Extrusionskopf üblicherweise kontinuierlich ein Kunststoffschlauch extrudiert, der ein- oder mehrschichtig ausgebildet sein kann. Der Kunststoffschlauch wird abschnittsweise als Schlauchabschnitt in eine Formkavität, auch bekannt als Formnest, eines Blasformwerkzeugs eingebracht, durch ein mit Überdruck eingebrachtes Blasmedium in die gewünschte Form gebracht, abgekühlt und entformt. Bei diesem Verfahren bleibt üblicherweise nach dem Blasen im Bereich des Behälterbodens und/oder der Behälterschulter ein Butzen, der in einem weiteren Schritt abgetrennt wird.

Das weitere, sehr häufig eingesetzte Herstellverfahren für Kunststoffbehälter stellt das Streckblasformen dar. Bei diesem Verfahren wird ein sogenannter Preform, der meist eine längliche, röhrchenartige Gestalt besitzt, und an seinem einen Längsende einen Boden und am anderen Längsende einen Halsbereich mit ausgeformten Befestigungselementen für eine Verschlusskappe, beispielsweise Gewindeabschnitte, und eine Halsöffnung aufweist, in das Formnest eines Blasformwerkzeugs eingesetzt und durch ein mit Überdruck eingebrachtes Blasmedium in die gewünschte Form gebracht. Dabei wird der Preform zusätzlich mit einem durch die Halsöffnung eingefahrenen Reckdorn in axiale Richtung gereckt. Nach dem Streck-/Blasvorgang wird der fertige Kunststoffbehälter abgekühlt und aus dem Blasformwerkzeug entformt.

Der extrudierte Schlauch und auch der Preform werden in ihren jeweiligen Verfahren teilweise auch als Vorformling bezeichnet.

Ein Blasformwerkzeug ist typischerweise aus zwei Werkzeughälften gebildet, wobei der Aufbau auch mehr als zweiteilig sein kann. Es handelt sich dann nicht mehr um Werkzeughälften, sondern um Werkzeugelemente oder Werkzeugteile. Der Einfachheit halber wird vorliegend auch für nicht hälftige Aufteilungen des Blasformwerkzeuges der Ausdruck Werkzeughälfte verwendet.

Das Blasformwerkzeug weist einen Formkörper mit einer Kavität auf und stellt damit ein sogenanntes Formnest zur Formung eines Behälters bereit. Je nach Behälterform ist dieses Formnest symmetrisch oder asymmetrisch. Bei asymmetrischen Formen können die zwei oder mehreren Werkzeughälften derart aufgeteilt sein, dass ihre Trennlinien an bevorzugten Orten des späteren Behälters ausgebildet werden und entsprechend nicht zwingend in gleichmässigen Bruchteilen aufgeteilt sein müssen.

Die Werkzeughälften werden beim Extrusion-Blow-Molding-Verfahren (EBM-Verfahren) oder Extrusionsblasverfahren periodisch geöffnet, geschlossen und wieder geöffnet, um einen Vorformling in das Formnest einzubringen und nach dem Aufblasen den fertigen Behälter wieder zu entformen.

Ein Blasformwerkzeug für einen Behälter wird typischerweise in drei Bereiche unterteilt, einen Bodenbereich, einen Mittelbereich und einen Hals- / Schulterbereich. Ein fertiggestellter Behälter weist typischerweise einen Behälterboden, einen Behälterkörper und eine Behälterschulter mit einem Hals auf. Der Hals endet mit einer Ausgiessöffnung. Der Hals weist typischerweise Mittel zum Befestigen eines Verschlusses auf, beispielsweise ein Gewinde oder Gewindesegmente zur formschlüssigen Fixierung eines Drehverschlusses. Die Behälterschulter wird typischerweise beim Blasformen des Behälters erst unterhalb des Halses aufgeblasen. Im Anschluss an die Behälterschulter, mit anderen Worten zwischen der Behälterschulter und dem Behälterboden, wird der Behälterkörper aufgeblasen. Dies entspricht im Wesentlichen dem Mittelbereich eines Blasformwerkzeugs. Der Behälterboden entsteht wiederum im Bodenbereich. Der Hals selbst ist beim Stretch-Blow-Molding-Verfahren (SBM-Verfahren) als Spritzgiessteil ausgebildet. Im Extrusion-Blow-Molding-Verfahren werden bei der Fertigung des Behälters der Boden und meist auch der Hals im Wesentlichen durch Verpressen des Schlauches gebildet. Die miteinander verpressten Schlauchabschnitte, die im Allgemeinen die doppelte Wandstärke des Schlauchs besitzen, werden Butzen genannt. Diese werden in der Regel nach der Entnahme des Hohlblaskörpers, bzw. Behälters, aus dem Blasformwerkzeug von dem Hohlblaskörper abgetrennt. Die Fertigungsverfahren EBM und SBM lassen sich am fertigen Produkt unterscheiden. So besitzt ein Produkt, welches im SBM-Verfahren und damit aus einem als Preform ausgebildeten Vorformling gefertigt ist, in der Regel einen Anspritzpunkt. Ein Produkt, welches im EBM-Verfahren und damit aus einem als extrudierten Schlauch ausgebildeten Vorformling gefertigt ist, weist sichtbare Nahtstellen im Bodenbereich und/oder Schulter-/Halsbereich, die sich entlang der Trennung der Werkzeughälften erstrecken und durch die Abtrennung der Butzen gebildet sind, auf. Eine Zwitterstellung nehmen Preforms ein, die im EBM-Verfahren hergestellt sind. Allerdings sind auch hier am fertigen Produkt Nahtstellen sichtbar, die bei der Fertigung des Preforms gebildet wurden.

Der Formenbau ist unterschiedlichen Restriktionen unterworfen. Einerseits betrifft dies Erfordernisse in Bezug auf das Blasformwerkzeug selbst. So müssen diese beispielsweise Kühlkanäle aufweisen, was wiederum beispielsweise eine Mindestgrösse des Blasformwerkzeugs erfordert. Andererseits betrifft dies Erfordernisse, die durch die spätere Form eines Behälters und/oder durch dessen Material vorgegeben sind.

Je nach Ausformung des späteren Behältnisses weist der Formkörper des Blasformwerkzeuges unterschiedliche Wandstärken auf, um einerseits beispielsweise die nötige Festigkeit zu erlangen und andererseits entsprechende Befestigungspunkte oder Kraftangriffspunkte am Formkörper oder Anschlusspunkte für einen Kühlkreislauf bereitstellen zu können.

Extrusionsgeblasene Schläuche aus Polyolefinen werden typischerweise mit einer Temperatur von 180° Celsius mit einer Abweichung von bis zu 20° K in die Blasform eingefahren, Preforms aus Polyethylenterephthalat werden typischerweise mit Temperaturen von etwa 100° Celsius in die Blasform eingesetzt. Da Kunststoff bekanntlich ein schlechter Wärmeleiter ist, muss durch das Blasformwerkzeug am Ende des Blasprozesses der Kunststoffbehälter vor seinem Entformen soweit herunter gekühlt sein, dass die durch die Wandung des Behälters gespeicherte Restwärme nicht dazu führen kann, dass sich der der Blasform entnommene Kunststoffbehälter verformt.

Polyolefine werden typischerweise bei ca. 60° Celsius entformt, wobei die Temperatur am Hals noch bei ca. 80° Celsius liegt. Polyethylenterephthalat wird entformt, wenn der Behälterkörper eine Temperatur von etwa 30° Celsius aufweist, wobei der Halsbereich, der Bodenbereich und, wenn vorhanden, auch der Griffbereich eine höhere Temperatur von rund 60° Celsius aufweisen können. Mit anderen Worten hat der entformte Körper in unterschiedlichen Bereichen unterschiedliche Temperaturen und demzufolge in diesem Zeitpunkt keine gleichmässigen Materialeigenschaften.

Es kann daher eine Aufgabe darin bestehen, ein Blasformwerkzeug und/oder einen insbesondere im Extrusionsblasverfahren hergestellten Hohlblaskörper bereitzustellen, der bei der Entnahme aus der Blasform, insbesondere im Halsbereich, weitgehend spannungsfrei ist.

Diese Aufgabe wird durch die in den unabhängigen Patentansprüchen definierten Vorrichtungen gelöst. Weitere Ausführungsformen ergeben sich aus den abhängigen Patentansprüchen.

Gemäss einer ersten Ausführungsform weist ein Formkörper für ein Extrusionsblasformwerkzeug einen Bodenbereich, einen Schulterbereich, einen Mittelbereich und eine Trennebene auf. Im Formkörper ist wenigstens ein Formnest mit einer Innenwandung angeordnet. Im Formkörper ist wenigstens ein Temperierkanal angeordnet. Der wenigstens eine Temperierkanal ist derart im Formkörper angeordnet, einem ersten Bereich der Innenwandung mehr Wärme zu entziehen oder zuzuführen als einem zweiten Bereich der Innenwandung, der dem ersten Bereich benachbart ist.

Durch die Möglichkeit, der Innenwandung des Formnests an unterschiedlichen Bereichen unterschiedliche Mengen an Wärme zu entziehen oder zuzuführen, kann einem Hohlblaskörper an unterschiedlichen Bereichen seiner Aussenwandung, die nach der Fertigung des Hohlblaskörpers und vor der Entformung an der Innenwandung des Formnests anliegt, unterschiedlich viel Wärme entzogen oder zugeführt werden. In Hinblick auf den Wärmeentzug kann den Bereichen des Hohlblaskörpers, die dickwandiger ausgebildet sind, wie beispielsweise der Hals- / Schulterbereich, der Bodenbereich oder auch der Griffbereich, als der verbleibende Behälterkörper, mehr Wärme entzogen werden als besagtem verbleibenden Behälterkörper. Gerade im Halsbereich entsteht eine Materialansammlung, da beim Formen des Halsbereichs beim Extrusionsblasformen aus einem Schlauch der Halsbereich nicht durch das Blasen ausgedünnt wird. Mit dem vorgeschlagenen Formkörper kann im Idealfall innerhalb des Hohlblaskörpers bei der Entformung eine gleichmässige Temperaturverteilung geschaffen werden, die einem Verzug durch eine ungleichmässige Temperaturverteilung entgegenwirken kann, wie dies bei Hohlblaskörpern nach dem Stand der Technik auftreten kann. Dies kann bedeuten, dass bei dem vorgeschlagenen Hohlblaskörper nach dessen Entnahme aus dem Formkörper der Temperaturgradient zwischen dem Bereich mit dem geringsten Materialeinsatz und dem Bereich mit dem grössten Materialeinsatz zu dem Zeitpunkt der Angleichung der Temperatur der Innenwandung an die Temperatur der Aussenwandung des jeweiligen Bereichs des Hohlblaskörpers, also die in den Wandungen der jeweiligen Bereiche gespeicherte Wärme an die jeweilige Innenwandung und Aussenwandung im Wesentlichen vollständig abgegeben wurde, klein und im Idealfall nicht mehr vorhanden ist. Hierbei kann es unabhängig sein, ob der Temperaturgradient an der Aussenwandung, der Innenwandung oder in der Wandung des Hohlblaskörpers gemessen wird. Die Temperatur der Innenwandung und/oder der Aussenwandung ist zum Zeitpunkt der Angleichung deutlich über der Umgebungstemperatur. In Folge kann der Hohlblaskörper aus dem vorgeschlagenen Formkörper früher entnommen werden als dies bei einem Formkörper nach dem Stand der Technik der Fall wäre. Durch die Ersparnis von Zykluszeit kann sich ein Hohlblaskörper mit dem vorgeschlagenen Formkörper preisgünstiger herstellen lassen als mit einem Formkörper nach dem Stand der Technik.

Wenn die Kühlung über einen einzelnen Temperierkanal erfolgt, kann der eine Temperierkanal so angeordnet sein, dass er bei gleichem Querschnitt an dem ersten Bereich der Innenwandung des Formnests näher vorbeigeführt wird als an dem zweiten Bereich. Auch kann der eine Temperierkanal so ausgelegt sein, dass er von der Innenwandung im ersten Bereich und im zweiten Bereich im Wesentlichen gleich beabstandet ist, jedoch die Strömungsgeschwindigkeit des Temperierfluids im Temperierkanal zur Kühlung des ersten Bereichs höher ist als die Strömungsgeschwindigkeit zur Kühlung des zweiten Bereichs. Eine höhere Strömungsgeschwindigkeit des Temperierfluids führt generell mehr Wärme ab als eine niedrigere. Eine höhere Strömungsgeschwindigkeit kann beispielsweise durch eine Verkleinerung des Strömungsquerschnitts des Temperierkanals erzeugt werden. Weiterhin kann der Temperierkanal im ersten Bereich mehrfach über den ersten Bereich geführt werden, um eine Packungsdichte des Temperierkanals gegenüber dem zweiten Bereich zu erhöhen, die letztlich einen höheren Entzug von Wärme an dem ersten Bereich gegenüber dem zweiten Bereich bewirkt. Generell kann der Innenwandung des Formnests mehr Wärme entzogen werden, wenn der Strömungsquerschnitt bei gleicher Strömungsgeschwindigkeit vergrössert wird, da hierdurch mehr Temperierfluid durch den Temperierkanal gelangt. Weiterhin kann der wenigstens eine Temperierkanal genutzt werden, um dem ersten und dem zweiten Bereich der Innenwandung Wärme zuzuführen.

Gemäss der Erfindung schliesst sich der erste Bereich der Innenwandung an die Trennebene an und der zweite Bereich der Innenwandung steht im Wesentlichen senkrecht auf die Trennebene. Beispielsweise kann sich der eine Temperierkanal von einer linken Seite der Trennebene in Blick auf ein in eine Blasmaschine eingebautes Blasformwerkzeug mit einem kleineren Querschnitt über den ersten Bereich der Innenwandung, mit einem grösseren Querschnitt über den zweiten Bereich der Innenwandung und wiederum mit einem kleineren Querschnitt über den ersten Bereich der Innenwandung der der linken Seite gegenüberliegenden rechten Seite erstrecken. Wenn beispielsweise zwei Temperierkanäle vorhanden sind, können beispielsweise der links- und rechtsseitige erste Bereich mit dem einen Temperierkanal gekühlt werden und mit dem anderen Temperierkanal der zweite Bereich, wobei die Querschnitte der beiden Temperierkanäle unterschiedlich sein können. Auch können der erste und der zweite Temperierkanal aus einem gemeinsamen Temperierkanal durch Verzweigung geschaffen und/oder der erste und der zweite Temperierkanal zu einem gemeinsamen Temperierkanal zusammengeführt werden. Sinngemäss können die anhand von einem und zwei Temperierkanälen beschriebenen Ausführungsformen auf drei und mehr Temperierkanäle angewendet werden. Obige Ausführungen gelten sinngemäss, wenn der oder die Temperierkanäle zur Wärmezufuhr genutzt werden.

Gemäss einer weiteren Ausführungsform der Erfindung verkleinert sich der Entzug und/oder die Zufuhr von Wärme von dem ersten Bereich der Innenwandung zu dem zweiten Bereich der Innenwandung stetig, und umgekehrt. Hierdurch kann an dem Hohlblaskörper zwischen einem dem ersten Bereich der Innenwandung des Formnests korrespondierenden ersten Bereich des Hohlblaskörpers und einem dem zweitem Bereich der Innenwandung des Formnests korrespondierenden zweiten Bereich des Hohlblaskörpers direkt nach der Entnahme aus dem Blasformwerkzeug eine im Wesentlichen homogene Temperaturverteilung erzeugt werden.

Gemäss einer Ausführungsform kann der eine Temperierkanal mit konstantem Querschnitt sich von der linken Seite der Trennebene in Blick auf ein in eine Blasmaschine eingebautes Blasformwerkzeug über den ersten Bereich der Innenwandung mit stetig zunehmender Beabstandung von der Innenwandung des Formnests bis zu einem Maximum der Beabstandung im zweiten Bereich der Innenwandung und von dort mit stetig abnehmender Beabstandung bis zum ersten Bereich der Innenwandung der der linken Seite gegenüberliegenden rechten Seite erstrecken.

Gemäss einer weiteren Ausführungsform kann der Temperierkanal von dem ersten Bereich der linksseitigen Trennebene über den zweiten Bereich bis zur rechtsseitigen Trennebene von der Innenwandung gleichmässig beabstandet sein. Der Querschnitt dieses Temperierkanals kann sich dann von dem linksseitigen ersten Bereich bis zum zweiten Bereich stetig vergrössern um sich von dort bis zum rechtsseitigen ersten Bereich stetig zu verkleinern.

Gemäss einem weiteren Ausgestaltungsbeispiel der Erfindung weist der wenigstens eine Temperierkanal einen zumindest in einem Abschnitt konstanten nicht-kreisförmigen Querschnitt, insbesondere einen elliptischen oder ovalen Querschnitt, auf. Der Abschnitt mit dem nicht-kreisförmigen Querschnitt ist tordiert im Formkörper angeordnet. Der konstante nicht-kreisförmige Querschnitt des Temperierkanals kann gewährleisten, dass die Strömungsgeschwindigkeit des Temperierfluids im Wesentlichen konstant ist. Es ist nicht notwendig, dass die geometrische Form des Abschnitts trotz konstanter Querschnittsfläche von Anfang bis Ende gleich ist. Ferner ist es unerheblich, ob der wenigstens eine Abschnitt mit dem konstanten nicht-kreisförmigen Querschnitt von der Innenwandung des Formnests gleichmässig oder ungleichmässig beabstandet ist. Die Wirkweise soll anhand eines elliptischen Abschnitts erklärt werden. Eine Ellipse besitzt vier Scheitelkrümmungskreise, wobei sich jeweils zwei Scheitelkrümmungskreise einander diametral gegenüberliegen und den gleichen Radius aufweisen. Jedoch sind die beiden Radien unterschiedlich. Die Torsion des elliptischen Abschnitts des einen Temperierkanals kann bewirken, dass ein erster Bereich des Abschnitts mit dem grösseren der beiden Radien der Scheitelkrümmungskreise an dem ersten Bereich des Formnests entlang geführt ist, um dort mehr Wärme zu entziehen oder zuzuführen als einem dem ersten Bereich des Formnests benachbarten zweiten Bereich des Formnests, an dem ein zweiter Bereich des Abschnitts mit dem kleineren der beiden Radien der Scheitelkrümmungskreise entlang geführt ist. Dieser Effekt der Wärmezuführung oder des Wärmeentzugs kann einerseits verstärkt werden durch eine grosse Differenz der beiden Radien der Scheitelkrümmungskreise und andererseits, indem ein erster Abstand zwischen dem ersten Bereich des Abschnitts und der Innenwandung des Formnests geringer ist als ein zweiter Abstand zwischen dem zweiten Bereich des Abschnitts und der Innenwandung des Formnests. Es versteht sich, dass die Umsetzung dieses Gedankens nicht auf eine elliptische oder ovale Querschnittsform beschränkt ist. Vielmehr kann diese Ausführungsform auf alle Querschnittsformen angewandt werden, deren Abstand von einem Schwerpunkt zu einem ersten Abschnitt des Begrenzungsrandes der Querschnittsform ungleich einem Abstand vom Schwerpunkt zu einem zweiten Abschnitt des Begrenzungsrandes der Querschnittsform ist, wobei der erste Abstand und der zweite Abstand voneinander verschieden sind.

Gemäss einer weiteren Ausführungsform der Erfindung ist der Entzug von Wärme durch den wenigstens einen Temperierkanal aus einer in dem Formnest angeordneten und/oder aus einer an das Formnest angrenzenden Butzenkammer, die in dem Formkörper an der Trennebene ausgebildet ist und mit dem Formnest über einen durch eine Quetschkante gebildeten Spalt verbunden ist, grösser als aus dem zweiten Bereich. Der erste Bereich betrifft also die Butzenkammer. Butzenkammern werden an der Formtrennebene in den Formkörper hinein gefertigt. In den Butzenkammern wird der Butzen gebildet, der überschüssiges Material darstellt, welches bei der Fertigung eines Hohlblaskörpers durch Abquetschen des Schlauchs entsteht, der in das Formnest gefahren wird, und, wie bereits ausgeführt, etwa die doppelte Wandstärke des eingefahrenen Schlauchs aufweist und damit eine erheblich höheren Wärmeinhalt aufweist als der Hohlblaskörper selbst, dessen Wandstärke gegenüber der Wandstärke des in das Formnest eingefahrenen Schlauchs zudem durch den Blasprozess verringert wurde. Dieser Butzen kann aufgrund seines Wärmeinhalts über die Verbindung zu dem Hohlblaskörper den Hohlblaskörper zusätzlich Wärme zuführen. Butzen verbleiben bei der Entnahme des Hohlblaskörpers aus dem Formkörper in der Regel an dem Hohlblaskörper und werden erst nach der Entnahme von dem Hohlblaskörper in einem separaten Arbeitsschritt entfernt. Die Innenwandung von Butzenkammern weisen in der Regel sich bis in die Nähe des Formnests erstreckende Zacken auf, die so angeordnet sind, dass an dem Butzen in Aufsicht ein S-förmiges Profil ausgebildet ist. Dies bedeutet, dass einer in der einen Werkzeughälfte als Zacken ausgebildeten Erhöhung eine in der der einen Werkzeughälfte gegenüberliegenden anderen Werkzeughälfte als Kanal ausgebildete Vertiefung gegenüberliegt. Ziel dieser Anordnung ist einerseits eine möglichst gute Verpressung der Schlauchwandungen aneinander und ein vollflächiges Anliegen an der Wandung der Butzenkammer, damit ihre Wärme in die Blasform eingeleitet werden kann. Andererseits erzeugt das S-förmige Profil eine Eigenstabilität des Butzens, so dass dieser leicht von dem Hohlblaskörper nach der Entnahme aus der Blasform entfernbar ist. Die Zacken, respektive die Kanäle sind in einem Teilabschnitt der Blasform parallel zueinander. Dies kann bedeuten, dass die Zacken, respektive die Kanäle einzelner Teilabschnitte einen Winkel einschliessen, der in einer bevorzugten Ausführungsform 90° sein kann. Der Abstand benachbarter Zacken, respektive benachbarter Kanäle innerhalb eines Teilabschnitts der Blasform voneinander ist gleich, um einen gleichmässigen Wärmeeintrag in die Blasform zu gewährleisten. Zudem kann mit der Ausbildung von Kanälen die Kontaktfläche des Butzens zu dem temperierten Werkzeug maximiert werden. Durch die Ausbildung von Zacken und Kanälen an der Wandung der Butzenkammer kann die Oberfläche der Butzenkammer bezogen auf eine vorbestimmte Länge gegenüber einer Ausgestaltung vergrössert sein, bei der die Wandung der Butzenkammer plan ist. Die Tiefe der Kanäle ergibt sich im Wesentlichen aus der Wanddicke des Kunststoffschlauchs und ist in der Regel geringer als die doppelte Wanddicke. Ein zwischen der Innenwandung der Kavität und einer Mittelachse des Zackens, respektive des Kanals eingeschlossener Winkel kann zwischen grösser als 0° und 90°, bevorzugt zwischen etwa 30° und 90° sein. Im Idealfall ist der Winkel zwischen etwa 45° und 90°. Der Entzug der Wärme aus den Butzen führt zu einer verringerten Butzentemperatur und damit zu einer homogenen Temperaturverteilung an dem Hohlblaskörper direkt nach der Entnahme aus dem Blasformwerkzeug. Der Hohlblaskörper kann beispielsweise als ein Behälter oder eine Flasche ausgebildet sein. Gerade die verringerte Butzentemperatur kann eine zu geringe Eigensteifigkeit des Butzens vermeiden. Eine zu geringe Eigensteifigkeit des Butzens kann zu einem Umkippen des Butzens nach der Entformung des Hohlblaskörpers und damit zu einem Verkleben mit dem Hohlblaskörper führen. Auch kann ein nicht erstarrter Butzen beim Mahlen in der Mühle zu Problemen, insbesondere zu einem Zuschmieren der Messer, führen. Das Entfernen eines Butzens mit unzureichender Eigensteifigkeit führt beim Abtrennen regelmässig zu fransigen Rändern am Hohlblasköper an den ursprünglichen Verbindungsstellen des Butzens an dem Hohlblaskörper. Während die fransigen Ränder im Bodenbereich oder Schulterbereich möglicherweise noch als Schönheitsfehler angesehen werden können, führen die fransigen Ränder im Bereich von Griffen beim Nutzer regelmässig zu einem negativen haptischen Erlebnis, welches durch den Nutzer zumindest als mangelnde Qualität des Hohlblaskörpers bewertet wird.

Gemäss einer weiteren Ausführungsform der Erfindung ist der wenigstens eine Temperierkanal zumindest teilweise in einem generativen Fertigungsverfahren hergestellt. Die generative Ausbildung von Temperierkanälen am Formkörper ermöglicht es, die Temperierkanäle beispielsweise in der Form frei auszubilden, wobei insbesondere geschwungene Formen ermöglicht sind oder Strömungsquerschnitte, die von einer runden Form abweichen. Derartige Ausbildungen sind beispielsweise bei konventionellen Formkörpern nicht möglich, da in Kühlbohrungen keine Richtungswechsel möglich sind. Durch die Ausbildung der Temperierkanäle in generativen Verfahren ist es zudem möglich, mit Kühlbohrungen nicht erreichbare Stellen, die beispielsweise in rückspringenden oder vorspringenden Bereichen des Formkörpers sind, zu erreichen. Es ist zudem möglich, zu einer Innenwandung des Formnests je einen spezifischen Abstand konstant einzuhalten. Bei einem konventionellen Formkörper mit Kühlbohrungen sind die Kühlbohrungen typischerweise parallel zu einer Mittelachse des Formkörpers bzw. des Formnests, angeordnet. Je nach Ausbildung oder Form der Innenwandung ist diese entsprechend ihres Abstandes zur Mittelachse mehr oder weniger von der Kühlbohrung beanstandet. Mit Temperierkanälen die im generativen Verfahren hergestellt sind, ist auch bei geschwungenen Innenwandungen eine individuelle Beabstandung des Temperierkanals zur Innenwandung des Formkörpers möglich.

Gerade durch die Möglichkeit der Änderung der Querschnittsform des wenigstens einen Temperierkanals kann der Kontur eines Hohlblaskörpers, beispielsweise Einschnürungen, besser gefolgt werden. Um mit konventionellen Kühlbohrungen beispielsweise sich kreuzende Temperierkanäle herzustellen ist es erforderlich, dass diese von unterschiedlichen Seiten in die Formkörper gebohrt werden müssen und die jeweiligen Eintrittsöffnungen nachträglich wieder verschlossen werden müssen. Diesem Nachteil kann ebenfalls durch die generative Fertigung eines Temperierkanals abgeholfen werden. Separate Öffnungen im Formkörper können vermieden werden. Dabei kann insbesondere vorgesehen sein, dass die Temperierkanäle in Bereichen mit hohem Wärmeeintrag näher an der jeweiligen Innenwandung angeordnet sind als in Bereichen mit geringerem Wärmeeintrag. Bei Beaufschlagung des wenigstens einen Temperierkanals mit konstantem Querschnitt mit Temperierfluid kann entsprechend aus Bereichen, in denen der wenigstens eine Temperierkanal näher an der jeweiligen Innenwandung angeordnet ist mehr Wärme abgeführt werden als aus Bereichen in denen der Temperierkanal oder die Temperierkanäle mehr beabstandet zur Innenwandung angeordnet sind. In Summe ergibt dies an der Oberfläche des geblasenen Behälters eine im Wesentlichen über die ganze Oberfläche gleichmässige Temperatur. Nach der Entnahme aus dem Formkörper weist der Körper des Behälters damit im Idealfall keine Temperaturgradienten auf, oder lediglich geringe.

Dabei kann vorgesehen sein, dass die Temperierkanäle im Bereich der späteren Butzen und/oder im Bereich der Trennebene nahe der Oberfläche angeordnet sind und sich ihr Abstand in Richtung zu einer Ebene, die 90° zu Trennebene steht, stetig verändert, sodass ihr Abstand in diesem Bereich der am weitesten entfernte Abstand der Temperierkanäle zu der Innenwandung ist. Zusätzlich oder alternativ kann dieser Effekt verstärkt werden, in dem in Bereichen mit hohem Wärmeeintrag, beispielsweise im Hals-/Schulterbereich und/oder im Bodenbereich und/oder im Griffbereich und/oder im Bereich der Trennebene, ein Querschnitt eines ersten Temperierkanals grösser ist als ein Querschnitt eines zweiten Temperierkanals, der in einem Bereich mit einem niedrigen Temperatureintrag angeordnet ist, sodass im ersten Temperierkanal mehr Wärme durch das Temperierfluid aufgenommen werden kann als im zweiten Temperierkanal.

Der wenigstens eine Temperierkanal ist vorzugsweise im Halsbereich und/oder Schulterbereich des Formkörpers angeordnet. Insbesondere im Extrusionsblasverfahren entsteht ein hoher Wärmeeintrag im Halsbereich und/oder Schulterbereich des Formkörpers. Dies kann zudem ein Bereich sein, in dem ein Butzen ausgebildet wird. Mit anderen Worten ist in diesem Bereich mehr Material des Vorformlings mit einer hohen Temperatur vorhanden und entsprechend wird der Formkörper in diesem Bereich mit einem erhöhten Wärmeeintrag beaufschlagt. Zudem befindet sich dieser Bereich nahe am Extrusionskopf, der Wärme abstrahlt. Durch die Ausbildung des wenigstens einen Temperierkanals im Schulterbereich kann diesem Umstand begegnet werden. Die Wärme aus dem Butzen, beziehungsweise aus dem Hals- und/oder Schulterbereich, lässt sich im Vergleich zu konventionellen Bohrungen besser und insbesondere schneller austragen.

Der wenigstens eine Temperierkanal ist zusätzlich oder alternativ im Bodenbereich des Formkörpers angeordnet. Insbesondere im Extrusionsblasverfahren entsteht ein hoher Wärmeeintrag im Bodenbereich des Formkörpers. Dies ist zudem ein Bereich, in dem ein Butzen ausgebildet wird. Mit anderen Worten ist in diesem Bereich mehr Material des Vorformlings mit einer hohen Temperatur vorhanden und entsprechend wird der Formkörper in diesem Bereich mit einem erhöhten Wärmeeintrag beaufschlagt. Durch die Ausbildung des Temperierkanals im Bodenbereich kann diesem Umstand begegnet werden. Die Wärme aus dem Butzen, beziehungsweise aus dem Bodenbereich, lässt sich im Vergleich zu konventionellen Bohrungen besser und insbesondere schneller austragen.

Es kann insbesondere vorgesehen sein, dass der wenigstens eine Temperierkanal zusätzlich oder alternativ im Formkörper im Bereich der Butzenkammer angeordnet ist. Diese Führung des wenigstens einen Temperierkanals im Bereich der Butzenkammer ermöglicht eine verbesserte Wärmeabfuhr aus der Trennebene, die typischerweise massiv ausgebildet ist, um die Formkörper passgenau und spaltfrei verschliessen zu können. Durch die Ausbildung eines generativen gefertigten Temperierkanals im Bereich der Trennebene kann auf zusätzliche Bohrungen von aussen in den Formkörper hinein verzichtet werden, die eine Schwächung des Formkörpers darstellen können.

Gemäss einer weiteren Ausführungsform der Erfindung ist der wenigstens eine Temperierkanal in einem Griffbereich angeordnet. Im Extrusionsblasverfahren wird ein durchgreifbarer Griff dadurch gebildet, dass einander gegenüberliegende Innenwandungen des in das Blasformwerkzeug eingefahrenen Schlauchs oder Vorformlings in der Form des Griffs aneinander gepresst werden, und miteinander verschweisst und so einen Butzen bilden. In diesem Bereich ist somit mehr Material des Vorformlings mit einer hohen Temperatur vorhanden und entsprechend wird der Formkörper in diesem Bereich mit einem erhöhten Wärmeeintrag beaufschlagt. Durch die Ausbildung des wenigstens einen Temperierkanals im Griffbereich kann diesem Umstand begegnet werden. Die Wärme aus dem Butzen, beziehungsweise aus dem Griffbereich, lässt sich im Vergleich zu konventionellen Bohrungen besser und insbesondere schneller austragen. Zudem kann der wenigstens eine Temperierkanal entlang der Innenwandung des Formnests, respektive der Butzenkammer des Griffbereichs geführt werden.

Vorzugsweise ist eine Wandstärke zwischen dem wenigstens einen Temperierkanal und der entsprechenden Innenwandung und/oder der entsprechenden Trennebene und/oder Butzenkammer mindestens 1.5 mm. Mit anderen Worten ist eine Mindestmaterialstärke zwischen der Aussenkontur des Formkörpers und dem Temperierfluid von mindestens 1.5 mm vorhanden. Diese Dimensionierung garantiert eine Mindestfestigkeit, hervorgerufen durch die Mindestwandstärke.

Es kann vorgesehen sein, dass der Formkörper mehrteilig ausgebildet ist und der Hals- / Schulterbereich und/oder der Bodenbereich und/oder Griffbereich oder Teile davon separat ausgebildet sind. Dabei kann beispielsweise der Hals- / Schulterbereich gemeinsam mit dem Mittelbereich ausgebildet sein oder der Bodenbereich gemeinsam mit dem Mittelbereich. Es versteht sich von selbst, dass der Mittelbereich auch separat und unabhängig ausgebildet sein kann. In der Regel ist ein Griffbereich, sofern vorhanden, in dem Mittelbereich angeordnet. Auch können der Hals- / Schulterbereich und/oder Bodenbereich und/oder Griffbereich als eigene Einsatzteile ausgebildet sein, die in den Formkörper einsetzbar sind. Auch können die Einsatzteile aus einem anderen Werkstoff hergestellt sein als der Mittelbereich. Beispielsweise kann der Mittelbereich aus Aluminium gefertigt sein und ein oder mehr Einsatzteile aus Stahl. Gerade das Arbeiten mit Einsatzteilen ermöglicht ein einfaches und spezifisches Fertigen der einzelnen Bereiche sowie ein einfaches Tauschen in einem Servicefall. Auch kann beispielsweise vorgesehen sein, dass, je nach Form des zu blasenden Behälters, lediglich in einem der drei Bereiche ein generativ gefertigter Temperierkanal angeordnet ist, da dies beispielsweise in anderen Bereichen nicht notwendig ist.

Es ist daher vorstellbar, dass der wenigstens eine Temperierkanal im Hals- / Schulterbereich angeordnet ist und der Hals-/ Schulterbereich in einem generativen Fertigungsverfahren hergestellt ist und/oder der wenigstens eine Temperierkanal im Bodenbereich angeordnet ist und der Bodenbereich in einem generativen Fertigungsverfahren hergestellt wird und/oder der wenigstens eine Temperierkanal im Griffbereich angeordnet ist und der Griffbereich in einem generativen Fertigungsverfahren hergestellt ist. Es versteht sich von selbst, dass dies ebenfalls für den Mittelbereich möglich ist. Durch die generative Fertigung eines vollständigen Bereiches inklusive des jeweiligen wenigstens einen Temperierkanals kann dieser Bereich individuell auf den zu erwartenden Wärmeeintrag oder Wärmeaustrag bzw. auf die angestrebte Wärmeabfuhr oder Wärmezufuhr angepasst und entsprechend hergestellt werden.

Dabei kann vorgesehen sein, dass der Formkörper einen Mittelbereich aufweist, der konventionell und/oder generativ gefertigt ist. Die konventionelle Fertigung ist insbesondere von Vorteil bei einer relativ einfachen Geometrie von Behältern, beispielsweise bei Behältern, deren Mittelteil im Wesentlichen zylindrisch ausgebildet ist und somit der ganze Mittelbereich eines Formkörpers gleichmässig mit Wärme beaufschlagt wird. Entsprechend genügt für den Wärmeaustrag aus dem Mittelbereich des Formkörpers in einem solchen Fall das Vorhandensein von konventionellen Kühlbohrungen. Diese sind vorzugsweise entsprechend fluchtend zu generativ gefertigten Temperierkanälen im Bodenbereich und/oder Hals-/ Schulterbereich angeordnet, sodass sämtliche Temperierkanäle gemeinsam einen oder mehrere Temperierkreisläufe bilden.

Eine generative Fertigung bietet sich an, wenn der Behälter eine komplexe Geometrie, insbesondere eine oder mehrere Einschnürungen, Vorsprünge und/oder Hintersprünge aufweist. Hier kann der wenigstens eine Temperierkanal parallel zur Innenwandung des Formnests des Mittelbereichs in Richtung einer Formnestmittelachse geführt werden. Auch kann der wenigstens eine Temperierkanal schraubenförmig, der Innenwandung des Formnests folgend, ausgebildet sein.

Es kann vorgesehen sein, dass der wenigstens eine Temperierkanal einen sich entlang der Strömungsrichtung verändernden Querschnitt aufweist. Dabei kann es sich um eine Veränderung der Form des Querschnitts handeln und/oder um eine Veränderung der Fläche des Querschnitts. Durch eine Veränderung der Fläche des Querschnittes können unterschiedliche Strömungsgeschwindigkeiten eingestellt werden. Bei gleichbleibender Durchflussmenge ergibt sich durch einen sich aufweitenden Querschnitt eine Verlangsamung der Strömung und das Temperierfluid kann durch eine längere Verweildauer eine geringere Wärmemenge aufnehmen als bei einer schnelleren Strömung. Durch eine Veränderung der geometrischen Form des Querschnittes ist es möglich, innerhalb des Strömungsquerschnittes unterschiedliche Strömungen zu erzeugen, insbesondere Verwirbelungen. Die Verwirbelungen können zu einer besseren Aufnahme der Wärmeenergie durch das Temperierfluid und damit zu einem besseren Austrag der Wärmeenergie aus dem Formkörper führen. Das Temperierfluid kann ein Gas oder eine Flüssigkeit sein. Als Strömungsrichtung wird vorliegend im Wesentlichen die Richtung des Temperierfluids verstanden in die es strömt, wobei jeweils die Strömungsrichtung durch aneinandergereihte Punkte der Schwerpunkte der entsprechenden Strömungsquerschnitte festgelegt ist.

Zusätzlich oder alternativ kann vorgesehen sein, dass der wenigstens eine Temperierkanal einen gekrümmten, insbesondere räumlich gekrümmten Verlauf aufweist. Dabei wird der Verlauf des wenigstens einen Temperierkanals anhand der Definition der Schwerlinie festgestellt. Der gekrümmte Verlauf ermöglicht es, den Wärmeaustrag aus dem Formkörper, respektive den Wärmeeintrag in den Formkörper individuell zu gestalten. Durch einen räumlich gekrümmten Verlauf, beispielsweise einen schraubenlinienförmigen Verlauf, kann das Temperierfluid von der Innenwandung weg in Richtung eines kälteren Bereichs des Formkörpers transportiert werden und beispielsweise über eine benachbarte Temperierbohrung die Wärme diesen Schlingen entzogen werden oder bedarfsweise den Schlingen Wärme zugeführt werden.

Es kann daher auch vorgesehen sein, dass der wenigstens eine Temperierkanal zweidimensional oder dreidimensional mäandernd ausgebildet ist. Unter zweidimensional mäandernd ist zu verstehen, dass die Schlingen im Wesentlichen in einer Ebene liegen. Unter dreidimensional mäandernd ist zu verstehen, dass die Schlingen in einem Raum angeordnet sind, sich also gegenüber der Anordnung in einer Ebene zusätzlich in die dritte Dimension erstrecken. Somit kann sich ein Temperierkanal von einer ersten, in einer ersten Ebene ausgebildeten Schlinge, in eine zweite in einer zweiten Ebene ausgebildeten Schlinge erstrecken, wobei die erste Ebene und die zweite Ebene einen Winkel einschliessen. Der Temperierkanal kann also aus beliebig zueinander angeordneten Rohrbögen gebildet sein, wobei der Eingang und der Ausgang der Rohrbögen unterschiedliche Winkel einschliessen können. Auch hier entstehen einzelne Schlingen die es ermöglichen, die aufgenommene Wärme relativ schnell in von der Innenwand des Formnests weiter entfernte Bereiche des Formkörpers auszutragen. Auch diese Schlingen können beispielsweise im Wärmetausch mit einer weiteren Temperierbohrung stehen, wobei diese sowohl im Gleichstrom als auch im Gegenstrom angeordnet sein kann.

Es kann vorgesehen sein, dass der Bodenbereich und/oder der Hals- / Schulterbereich und/oder der Mittelbereich und/oder Griffbereich je einen separaten Temperierkreislauf aufweisen. Dabei ist es vorstellbar, dass die jeweils bereichsweisen Temperierkreisläufe ebenfalls in mehrere separate Unterkreise aufgeteilt sind. Diese Temperierkreisläufe ermöglichen das spezifische Temperieren der einzelnen Bereiche, wobei durch die separate Ausbildung der Temperierkreisläufe beispielsweise unterschiedliche Durchflussraten und/oder unterschiedliche Strömungsgeschwindigkeiten erreichbar sind.

Der wenigstens eine Temperierkanal kann insbesondere wenigstens einen, vorzugsweise eine Vielzahl, an parallel geschalteten Teilabschnitten aufweisen. Dies ermöglicht eine feine Verästelung des wenigstens einen Temperierkanals was wiederum die Oberfläche erhöht, an welcher das Temperierfluid entlangströmt. Dies wiederum kann einen schnelleren Wärmeaustrag aus dem Formkörper oder Wärmeeintrag in den Formkörper begünstigen.

Das generative Fertigungsverfahren schliesst selektives Laserschmelzen und thermisches Spritzverfahren ein. Durch diese Fertigungsverfahren kann der Temperierkanal hergestellt sein. Diese Fertigungsverfahren eignen sich für die Herstellung von Formkörpern, da durch die genannten Verfahren eine hohe Materialqualität erreichbar ist, wobei in diesem Verfahren hergestellte Produkte im Wesentlichen fehlerfrei sind. Dies ist insbesondere vorteilhaft, da die Innenwandungen von Formkörpern eine hohe Oberflächengüte aufweisen müssen und diese mit den generativen Fertigungsverfahren erreichbar ist.

Ein weiterer Aspekt der Erfindung betrifft ein Extrusionsblasformwerkzeug umfassend zumindest einen Formkörper wie vorliegend beschrieben und insbesondere zwei zueinander komplementäre Formkörper, die in geschlossenem Zustand ein Formnest bilden.

Dies ermöglicht es, ein vollständiges Extrusionsblasformwerkzeug bereitzustellen das in Bezug zur Temperaturabfuhr respektive zur Wärmeabfuhr optimiert ausgebildet ist.

Anhand von Figuren, welche lediglich schematisch dargestellt sind, wird die Erfindung anhand einer exemplarischen Ausführungsform beispielhaft näher erläutert. Es zeigen:
- Figur 1:: eine 3D-Darstellung eines geöffneten Blasformwerkzeugs mit einem Formkörper mit zwei Formnestern;
- Figur 2:: eine 3D-Darstellung eines Formkörpers;
- Figur 3:: eine 3D-Darstellung einer Anordnung von Temperierkanälen in dem aus Figur 2 bekannten Formkörper;
- Figur 4:: eine 3D-Darstellung eines Temperierkanals in einem Hals- / Schultereinsatz;
- Figur 5:: eine Frontalsicht auf eine geöffnete Blasformhälfte; und
- Figur 6:: einen Schnitt durch eine Zacken-Kanalansicht einer im Bodenbereich der Blasform ausgebildeten Butzenkammer.

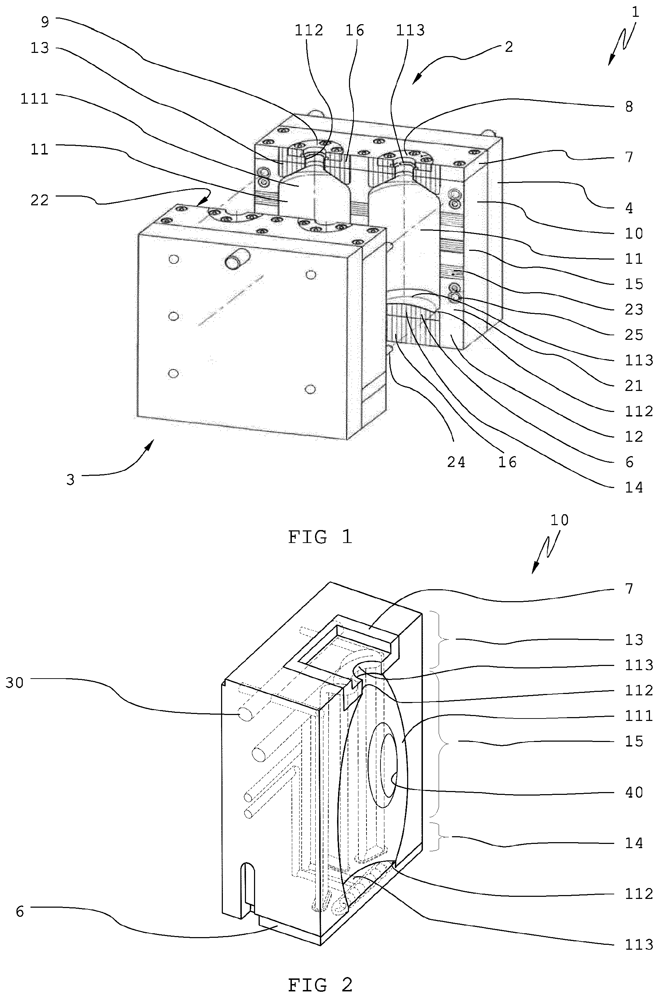

Die Figur 1 zeigt eine 3D-Darstellung eines geöffneten Blasformwerkzeugs 1 zur Erläuterung des prinzipiellen Aufbaus eines derartigen Werkzeugs. Das gesamthaft mit dem Bezugszeichen 1 versehene Blasformwerkzeug weist eine erste Blasformhälfte 2 und eine zweite Blasformhälfte 3 auf. Diese sind vorliegend relativ zueinander lateral verschiebbar, um das Blasformwerkzeug 1 periodisch zu öffnen und wieder zu schliessen. Jede Blasformhälfte 2, 3 umfasst eine Grundplatte 4, die einen Teil einer Schliesseinheit einer Blasformmaschine bildet. Auf der Grundplatte 4 ist ein Formkörper 10 angeordnet, in dem ein oder mehrere Formnester 11 ausgebildet sind. Gemäss der dargestellten Ausführungsform weist der Formkörper 10 zwei Formnester 11 auf, die je eine Hälfte der Form eines Körpers eines Kunststoffbehälters festlegen. Da sich die Formnester 11 entsprechen sind zur besseren Übersichtlichkeit nicht beide Formnester 11 mit allen Bezugszeichen versehen, obschon die Ausführungen jeweils für beide Formnester 11 gelten.

Die Innenwandung 111 bildet im Hals- / Schultereinsatz 7 hier nicht dargestellte Gewindeabschnitte zur Festlegung eines Verschlusses des Kunststoffbehälters aus. In der vorliegenden Ausführungsform wird durch den Hals- / Schultereinsatz 7 lediglich der Hals gebildet. Für die Ausformung des Schulterbereichs 13 wird ein eigener Schultereinsatz verwendet, der jedoch in der vorliegenden Figur nicht dargestellt ist. Im Fall des Blasformwerkzeugs 1 für eine Extrusionsblasformmaschine kann an dem Hals- / Schultereinsatz 7 auch noch ein Halsmesser 9 für das Abtrennen eines in das Blasformwerkzeug 1 eingesetzten extrudierten Kunststoffschlauchs vorgesehen sein. Ein als Bodeneinsatz 6 ausgebildeter Bodenbereich 14 schliesst das Formnest 11 an dem der Kopfplatte 7 gegenüberliegenden Ende des Formkörpers 10 ab. Sowohl an den Einsatzteilen des Hals- / Schultereinsatzes 7 als auch des Bodenbereichs 14 sind im Bereich der Trennebene 12 jeweils eine Butzenkammer 16 ausgebildet. Die Butzenkammer 16 erstreckt sich über den Hals- / Schultereinsatz 7 und den Bodeneinsatz 17 hinaus in die Trennebene 12 des Formkörpers 10 hinein. An den einander zugewandten Oberflächen 21, 22 der Blasformhälften 2, 3, welche eine Trennebene 12 des Blasformwerkzeugs 1 festlegen, können Entlüftungsschlitze 23 ausgebildet sein. An der einen Blasformhälfte 3 sind Führungsbolzen 24 ausgebildet, die beim Schliessen der Blasformhälften 2, 3 in Führungsbuchsen 25 der anderen Blasformhälfte 2 gleiten. Eine Innenwandung 111 begrenzt das Formnest 11 des Formkörpers 10. Die Innenwandung 111 besitzt im Bereich der Trennebene 12 einen ersten Bereich 112 und im Wesentlichen senkrecht dazu einen zweiten Bereich 113, der dem ersten Bereich 112 benachbart ist.

Die Figur 2 zeigt eine 3D-Darstellung eines Formkörpers 10, der lediglich ein Formnest 11 mit einer Innenwandung 111 aufweist. Wie bereits oben ausgeführt, besitzt die Innenwandung 111 im Bereich der Trennebene 12 an den Einsatzteilen des Hals- / Schulterbereichs 7 und des Bodenbereichs 14 einen ersten Bereich 112 und einen im Wesentlich senkrecht dazu stehenden zweiten Bereich 113, der dem ersten Bereich 112 benachbart ist. Auf die Darstellung der Butzenkammern ist verzichtet worden. Der Formkörper 10 weist einen Hals- / Schulterbereich 13, einen Bodenbereich 14 sowie einen Mittelbereich 15 auf, wobei der Mittelbereich 15 zusätzlich einen Griffbereich 40 aufweist. Innerhalb des Formkörpers 10 ist eine Vielzahl an Temperierkanälen 30 angeordnet die einen bzw. mehrere Temperierkreisläufe bilden. Die Temperierkanäle 30 weisen je einen individuellen Abstand zur Innenwandung 111 auf. Die Temperierkanäle 30 sind in dieser Darstellung lediglich gestrichelt dargestellt. Die Temperierkanäle 30 sind derart angeordnet, dass im Schulterbereich 13, im Bodenbereich 14 und im Mittelbereich 15 je ein separater Temperierkreislauf angeordnet ist. Die Temperierkanäle 30 im Mittelbereich 15 sind konventionell durch Bohren und Fräsen gefertigt. Die Temperierkanäle 30 im Bodenbereich 14 sowie im Hals- / Schulterbereich 13 sind generativ gefertigt. Dazu ist im Bodenbereich 14 ein Bodeneinsatz 6 angeordnet. Entsprechend ist im Schulterbereich 13 ein separater Hals- / Schultereinsatz 7 angeordnet. Der Hals- / Schultereinsatz 7 und der Bodeneinsatz 6 sind jeweils mittels eines selektiven Laserschmelzverfahrens aus Stahl gefertigt, wobei mittels dieses selektiven Laserschmelzverfahrens die entsprechenden Temperierkanäle 30 ausgebildet wurden. Die Temperierkanäle 30 im Bodenbereich 14 sind schraubenlinienförmig ausgebildet. Die Temperierkanäle 30 im Hals- / Schulterbereich 13 sind entsprechend der Kontur des geblasenen Behälters konturnah ausgebildet. Sowohl im Hals- / Schulterbereich 13 als auch im Bodenbereich 14 ist die Dichte an Temperierkanälen 30 pro Fläche der Innenwandung 111 des Formnests 11 höher als im Mittelbereich 15. Dies ermöglicht einen grösseren Entzug von Wärme im Verhältnis zur Wärmeabfuhr aus dem Mittelbereich 15. Wie vorliegend bereits erörtert ist der Wärmeeintrag aus dem Vorformling über den geblasenen Behälter in den Formkörper 10 sowohl im Hals- / Schulterbereich 13 als auch im Bodenbereich 14 höher als im Mittelbereich 15. Um den geblasenen Behälter also gleichmässig zu kühlen, muss aus diesen beiden Bereichen mehr Wärme abgeführt werden als aus dem Mittelbereich 15. Dies wird mit der höheren Dichte an Temperierkanälen 30 erreicht, die sich vorzugsweise möglichst nahe an der Innenwandung 111 des Formnests 11 entlang erstrecken. Obzwar nicht explizit dargestellt, ist es jedoch leicht vorstellbar, dass dem Griffbereich 40 ebenfalls durch ein Einsatzteil mit einem generativ gefertigten Temperierkanal 30 analog dem Hals- / Schultereinsatz 7 und/oder dem Bodeneinsatz 6 mehr Wärme entzogen werden kann als dem, den Griffbereich 40 umgebenden, restlichen Mittelkörper 15.

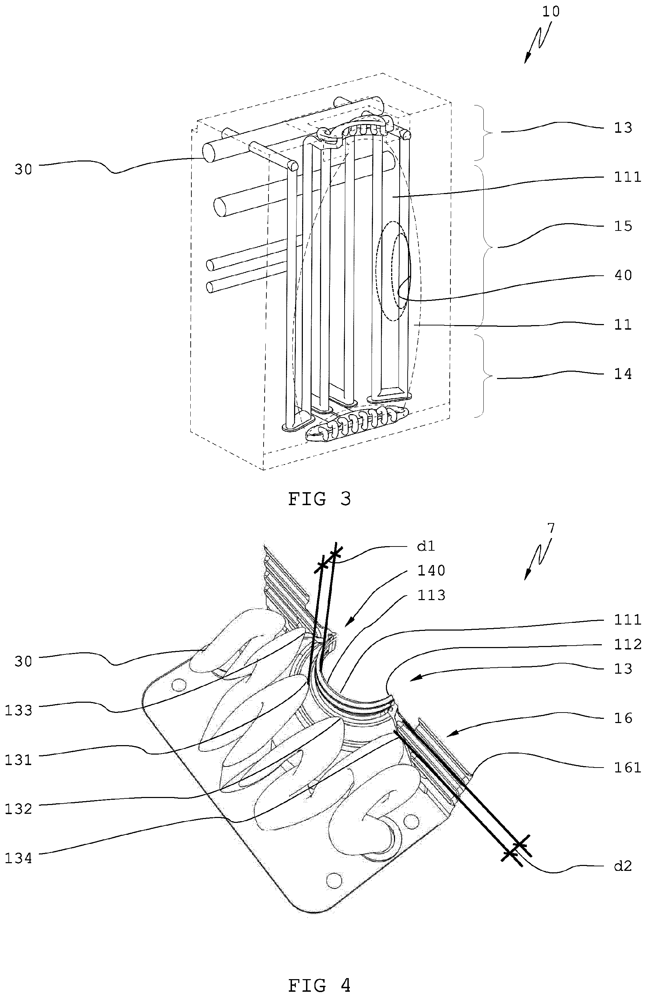

Die Figur 3 zeigt eine 3D-Darstellung einer Anordnung von Temperierkanälen 30 in dem aus Figur 2 bekannten Formkörper 10. Der Formkörper 10 mit dem Formnest 11 und dessen Innenwandung 111 ist lediglich gestrichelt dargestellt. Innerhalb des Formkörpers 10 ist eine Vielzahl an Temperierkanälen 30 angeordnet die einen bzw. mehrere Temperierkreisläufe bilden. Die Temperierkanäle 30 im Bodenbereich 14 sind mit einem zentralen Vorlauf und einem zentralen Rücklauf fluidkommunizierend verbunden. Mit dem zentralen Vorlauf und dem zentralen Rücklauf sind zusätzlich die Temperierkanäle 30 des Mittelbereichs 15 und des Hals- / Schultereinsatzes 7 parallel geschaltet und fluidkommunizierend verbunden. Dies ermöglicht die Fertigung eines individuellen Durchströmungsquerschnitts für das Temperierfluid für den Hals- / Schulterbereich 13, den Mittelbereich 15 und den Bodenbereich 14. Somit sind in den Temperierkanälen 30 der einzelnen Bereiche 13, 14, 15 individuelle Strömungsgeschwindigkeiten des Temperierfluids erzeugbar und damit auch eine individuelle Wärmeabfuhr. In der vorliegenden Ausführungsform wird der Innenwandung 111 im Hals- / Schulterbereich 13 und im Bodenbereich 14 durch das Temperierfluid mehr Wärme entzogen als der Innenwandung 111 im Mittelbereich 15.

Die Figur 4 zeigt eine 3D-Darstellung eines Temperierkanals 30 in einem Hals- / Schultereinsatz 7. Die Innenwandung 111 des Hals- / Schultereinsatzes 7 ist in einem ersten Teilbereich als Gewindeabschnitt für die Festlegung einer Verschlusskappe des späteren Behälters ausgebildet. Anschliessend an diesen ersten Teilbereich schliesst sich ein sich aufweitender zweiter Teilbereich an, wobei der erste und zweite Teilbereich gemeinsam den Hals- / Schulterbereich 13 bilden. Angrenzend an die Innenwandung 111 des Hals- / Schulterbereichs 13 ist die Butzenkammer 16 ausgebildet, in der überschüssiges Material des Schlauchs bei der Bildung des Hals- / Schulterbereichs 13 aufgenommen wird. Innerhalb des Hals- / Schultereinsatzes 7 ist der mittels des selektiven Laserschmelzens generativ gefertigte Temperierkanal 30 ausgebildet. Der Temperierkanal 30 weist einen dreidimensional mäandernden Verlauf auf. Deutlich sichtbar ist, dass ein erster Abstand d1 zwischen der Innenwandung 111 im Halsbereich 130 und den zur Kühlung des Halsbereichs 130 vorgesehenen Biegungen 131, 132 des mäandernden Temperierkanals 30 grösser ist als ein zweiter Abstand d2 zwischen einer Begrenzungsfläche 161 der Butzenkammer 16 und den zur Kühlung der Butzenkammer 16 vorgesehenen Biegungen 133, 134 des mäandernden Temperierkanals 30. Durch diese Anordnung ist es ermöglicht, dass der Temperierkanal 30 der Butzenkammer 16, respektive deren Begrenzungsfläche 161, dem ersten Bereich 112 der Innenwandung 111 mehr Wärme entzieht als dem, dem ersten Bereich 112 benachbarten, zweiten Bereich 113 der Innenwandung 111. Durch den ungleichmässigen Wärmeentzug wird einem Butzen und dem an dem Butzen angrenzenden ersten Bereich des Hals- / Schulterbereichs eines in dieser Blasform gefertigten Hohlblaskörpers mehr Wärme entzogen als einem dem ersten Bereich benachbarten und im Wesentlichen senkrecht auf den ersten Bereich stehenden zweiten Bereich. Somit werden Spannungen insbesondere im Hals- und Schulterbereich des Hohlblaskörpers nach der Entnahme aus der Blasform zumindest weitgehend, wenn nicht gar gänzlich verhindert.

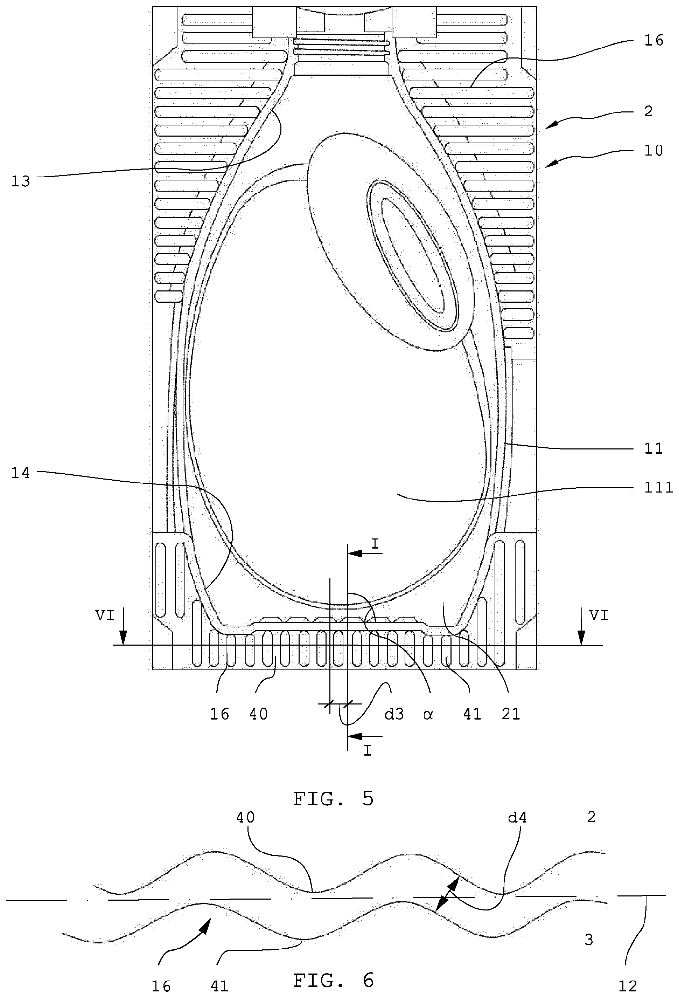

Die Figur 5 zeigt eine Frontalansicht auf eine Blasformhälfte 2, deren Formnest 11 ein Negativ einer Griffflaschenhälfte ist. An der Innenwandung 111 der Kavität 11 schliessen am Schulter- / Halsbereich 13 und im Bodenbereich 14 Butzenkammern 16 an. Die Butzenkammern 16 besitzen als Erhöhungen ausgebildete Zacken 40 und als Vertiefungen ausgebildete Kanäle 41, die in jeder Butzenkammer 16 alternierend parallel nebeneinander angeordnet sind. Eine Mittellinie I-I des Zackens 40, respektive des Kanals 41 und die Innenwandung 111 des Formnests 11 schliessen einen Winkel α ein, der zwischen grösser als 0° und 90° ist und im Idealfall zwischen etwa 45° und 90° ist. Ein Abstand d3 zwischen den einander benachbarten Zacken 40 ist innerhalb einer Butzenkammer 16 gleich.

Figur 6 zeigt einen Schnitt durch die Butzenkammer 16 des Bodenbereichs 14 mit geschlossenen Blasformhälften 2, 3. Die Trennebene 12 ist durch eine Strichpunktlinie angedeutet. Den Zacken 40 der einen Blasformhälfte 2 liegen die Kanäle 41 der anderen Blasformhälfte 3 gegenüber, so dass ein sich zwischen den Zacken 40 und den Kanälen 41 ergebender Abstand d4 im Wesentlichen über die Länge der Butzenkammer 16 gleich ist. Durch diese Anordnung ist einerseits eine gute Verpressung der Schlauchwandungen aneinander möglich sowie eine vollflächige Anlage an einer Wandung 161 der Butzenkammer 16, damit ihre Wärme zuverlässig in die Blasformhälften 2, 3 eingeleitet werden kann. Andererseits erzeugt das S-förmige Profil eine Eigenstabilität des Butzens, so dass dieser leicht von dem Hohlblaskörper nach der Entnahme aus der Blasform entfernbar ist. Der Abstand d4 ergibt sich im Wesentlichen aus der Wanddicke des Kunststoffschlauchs und ist in der Regel geringer als die doppelte Wanddicke.

## Patentansprüche

1. Formkörper für ein Extrusionsblasformwerkzeug,
wobei der Formkörper (10) einen Bodenbereich (14), einen Schulterbereich (13), einen Mittelbereich (15) und eine Trennebene (12) aufweist und im Formkörper (10) wenigstens ein Formnest (11) mit einer Innenwandung (111) angeordnet ist, wobei im Formkörper (10) wenigstens ein Temperierkanal (30) angeordnet ist,
wobei der wenigstens eine Temperierkanal (30) derart im Formkörper (10) angeordnet ist, einem ersten Bereich (112) der Innenwandung (111) mehr Wärme zu entziehen oder zuzuführen als einem zweiten Bereich (113) der Innenwandung (111), der dem ersten Bereich (112) benachbart ist,
**dadurch gekennzeichnet, dass**
sich der erste Bereich (112) der Innenwandung (111) an die Trennebene (12) anschliesst und der zweite Bereich (113) der Innenwandung (111) im Wesentlichen senkrecht auf die Trennebene (12) steht.

2. Formkörper (10) nach Anspruch 1, **dadurch gekennzeichnet, dass** sich der Entzug und/oder die Zufuhr von Wärme von dem ersten Bereich (112) der Innenwandung (111) zu dem zweiten Bereich (113) der Innenwandung (111) stetig verkleinert, und umgekehrt.

3. Formkörper (10) nach Anspruch 1 oder 2, **dadurch gekennzeichnet, dass** der Entzug von Wärme durch den wenigstens einen Temperierkanal (30) aus einer in dem Formnest (11) angeordneten und/oder aus einer an das Formnest (11) angrenzenden Butzenkammer (16), die in dem Formkörper (10) an der Trennebene (12) ausgebildet ist und mit dem Formnest (11) über einen durch eine Quetschkante gebildeten Spalt verbunden ist, grösser ist als aus dem zweiten Bereich (112).

4. Formkörper (10) nach einem der vorhergehenden Ansprüche,
**dadurch gekennzeichnet, dass** der wenigstens eine Temperierkanal (30) einen zumindest in einem Abschnitt konstanten nicht-kreisförmigen Querschnitt, insbesondere einen elliptischen oder ovalen Querschnitt, aufweist, wobei der Abschnitt tordiert im Formkörper angeordnet ist.

5. Formkörper (10) nach einem der vorhergehenden Ansprüche,
**dadurch gekennzeichnet, dass** der wenigstens eine Temperierkanal (30) zumindest teilweise in einem generativen Fertigungsverfahren hergestellt ist.

6. Formkörper (10) nach einem der vorhergehenden Ansprüche,
**dadurch gekennzeichnet, dass** der wenigstens eine Temperierkanal (30) im Halsbereich und/oder Schulterbereich (13) des Formkörpers (10) angeordnet ist.

7. Formkörper (10) nach einem der vorhergehenden Ansprüche,
**dadurch gekennzeichnet, dass** der wenigstens eine Temperierkanal (30) im Bodenbereich (14) des Formkörpers (10) angeordnet ist.

8. Formkörper (10) nach Anspruch 3, **dadurch gekennzeichnet, dass** der wenigstens eine Temperierkanal (30) im Formkörper (10) im Bereich der Butzenkammer (16) angeordnet ist.

9. Formkörper (10) nach einem der vorhergehenden Ansprüche,
**dadurch gekennzeichnet, dass** der wenigstens eine Temperierkanal (30) in einem Griffbereich angeordnet ist.

10. Formkörper (10) nach einem der vorhergehenden Ansprüche,
**dadurch gekennzeichnet, dass** eine Wandstärke zwischen dem wenigstens einen Temperierkanal (30) und der entsprechenden Innenwandung (111) und/oder Trennebene (12) und/oder Butzenkammer (16) mindestens 1.5 mm beträgt.

11. Formkörper (10) nach Anspruch 9, **dadurch gekennzeichnet, dass** der Formkörper (10) mehrteilig ausgebildet ist und der Hals- / Schulterbereich (13) und/oder der Bodenbereich (14) und/oder der Griffbereich separat ausgebildet sind.

12. Formkörper (10) nach Anspruch 11, **dadurch gekennzeichnet, dass** der wenigstens eine Temperierkanal (30) im Hals- / Schulterbereich (13) angeordnet ist und der Hals- / Schulterbereich (13) im generativen Fertigungsverfahren hergestellt ist und/oder der wenigstens eine Temperierkanal (30) im Bodenbereich (14) angeordnet ist und der Bodenbereich (14) in einem generativen Fertigungsverfahren hergestellt ist und/oder der wenigstens eine Temperierkanal (30) im Griffbereich angeordnet ist und der Griffbereich in einem generativen Fertigungsverfahren hergestellt ist.

13. Formkörper (10) nach einem der vorhergehenden Ansprüche,
**dadurch gekennzeichnet, dass** der Formkörper (10) einen Mittelbereich (15) aufweist der konventionell und/oder generativ gefertigt ist.

14. Formkörper (10) nach einem der vorhergehenden Ansprüche,
**dadurch gekennzeichnet, dass** der wenigstens eine Temperierkanal (30) einen sich entlang der Strömungsrichtung verändernden Querschnitt aufweist.

15. Formkörper (10) nach einem der vorhergehenden Ansprüche,
**dadurch gekennzeichnet, dass** der wenigstens eine Temperierkanal (30) einen gekrümmten, insbesondere räumlich gekrümmten, Verlauf aufweist.

16. Formkörper (10) nach einem der vorhergehenden Ansprüche,
**dadurch gekennzeichnet, dass** der Bodenbereich (14) und/oder der Hals- / Schulterbereich (13) und/oder der Mittelbereich (15) und/oder Griffbereich einen separaten Temperierkreislauf aufweisen.

17. Formkörper (10) nach einem der vorhergehenden Ansprüche,
**dadurch gekennzeichnet, dass** der wenigstens eine Temperierkanal (30) wenigstens einen parallel geschalteten Teilabschnitt aufweist.

18. Formkörper (10) nach Anspruch 5 oder 12, **dadurch gekennzeichnet, dass** das generative Fertigungsverfahren selektives Laserschmelzen und thermisches Spritzverfahren einschliesst.

19. Formkörper (10) nach einem der Ansprüche 3 bis 18, **dadurch gekennzeichnet, dass** die Butzenkammer (16) alternierend Zacken (40) und Kanäle (41) aufweist, wobei bei geschlossenen Blasformhälften (2, 3) die Zacken der einen Blasformhälfte (2) den Kanälen der anderen Blasformhälfte (3) gegenüberliegen.

20. Extrusionsblasformwerkzeug (1) umfassend zumindest einen Formkörper(10) nach einem der Ansprüche 1 bis 19.

## Claims

1. A mold body for a an extrusion blow mold,wherein the mold body (10) has a bottom region (14), a shoulder region (13), a central region (15) and a separating plane (12), and at least one mold cavity (11) has an inner wall (111) which is situated in the mold body (10), wherein at least one temperature control channel (30) is arranged in the mold body (10), wherein the at least one temperature control channel (30) is positioned in the mold body (10) in such a way as to remove more heat from or to supply more heat to a first region (112) of the inner wall (111) than a second region (113) of the inner wall (111) that is adjacent to the first region (112), **characterized in that** the first region (112) of the inner wall (111) adjoins the separating plane (12), and the second region (113) of the inner wall (111) is substantially perpendicular to the separating plane (12).

2. The mold body (10) according to claim 1, **characterized in that** the withdrawal and/or the supply of heat decreases steadily from the first region (112) of the inner wall (111) to the second region (113) of the inner wall (111), and vice versa.

3. The mold body (10) according to claim 1 or 2, **characterized in that** the extraction of heat through the at least one temperature control channel (30) from a slug chamber (16) arranged in the mold cavity (11) and/or from a slug chamber (16) adjacent to the mold cavity (11), which slug chamber (16) is formed in the mold body (10) at the separating plane (12) and is connected to the mold cavity (11) via a gap formed by a pinch edge, is greater than from the second region (112).

4. The mold body (10) according to any of the preceding claims, **characterized in that** the at least one temperature control channel (30) has a non-circular cross section which is constant at least in one section, in particular an elliptical or oval cross section, wherein the section is arranged twisted in the mold body.

5. The mold body (10) according to any of the preceding claims, **characterized in that** the at least one temperature control channel (30) is produced at least partially in a generative manufacturing method.

6. The mold body (10) according to any of the preceding claims, **characterized in that** the at least one temperature control channel (30) is arranged in the neck region and/or shoulder region (13) of the mold body (10).

7. The mold body (10) according to any of the preceding claims, **characterized in that** the at least one temperature control channel (30) is arranged in the bottom region (14) of the mold body (10).

8. The mold body (10) according to claim 3, **characterized in that** the at least one temperature control channel (30) is arranged in the mold body (10) in the region of the slug chamber (16).

9. The mold body (10) according to any of the preceding claims, **characterized in that** the at least one temperature control channel (30) is arranged in a handle region.

10. The mold body (10) according to any of the preceding claims, **characterized in that** a wall thickness between the at least one temperature control channel (30) and the corresponding inner wall (111) and/or separating plane (12) and/or the slug chamber (16) is at least 1.5 mm.

11. The mold body (10) according to claim 9, **characterized in that** the mold body (10) is formed in multiple parts, and the neck/shoulder region (13), and/or the bottom region (14), and/or the handle region are formed separately.

12. The mold body (10) according to claim 11, **characterized in that** the at least one temperature control channel (30) is arranged in the neck/shoulder region (13), and the neck/shoulder region (13) is produced in the generative manufacturing method, and/or the at least one temperature control channel (30) is arranged in the bottom region (14) and the bottom region (14) is produced in a generative manufacturing method, and/or the at least one temperature control channel (30) is arranged in the handle region and the handle region is produced in a generative manufacturing method.

13. The mold body (10) according to any of the preceding claims, **characterized in that** the mold body (10) has a central region (15) which is produced conventionally and/or generatively.

14. The mold body (10) according to any of the preceding claims, **characterized in that** the at least one temperature control channel (30) has a cross section which varies along the flow direction.

15. The mold body (10) according to any of the preceding claims, **characterized in that** the at least one temperature control channel (30) has a curved, in particular spatially curved, profile.

16. The mold body (10) according to any of the preceding claims, **characterized in that** the bottom region (14) and/or the neck/shoulder region (13), and/or the central region (15), and/or the handle region have a separate temperature control circuit.

17. The mold body (10) according to any of the preceding claims, **characterized in that** the at least one temperature control channel (30) has at least one subsection connected in parallel.

18. The mold body (10) according to claim 5 or 15, **characterized in that** the generative production method includes selective laser melting and a thermal spraying method.

19. The mold body (10) according to any one of claims 3 to 18, **characterized in that** the slug chamber (16) has alternating spikes (40) and channels (41), wherein when the blow mold halves (2, 3) are closed, the spikes of one blow mold half (2) are opposite the channels of the other blow mold half (3).

20. Extrusions blow mold (1) comprising at least one mold body (10) according to any of claims 1 to 19.

## Revendications

1. Corps de moule pour un moule de moulage par extrusion-soufflage, dans lequel le corps de moule (10) présente une zone de fond (14), une zone d'épaulement (13), une zone centrale (15) et un plan de séparation (12) et au moins une cavité de moule (11) avec une paroi intérieure (111) est disposée dans le corps de moule (10), dans lequel au moins un canal de thermostatisation (30) est disposé dans le corps de moule (10),
dans lequel l'au moins un canal de thermostatisation (30) est disposé dans le corps de moule (10) pour retirer ou apporter plus de chaleur à une première zone (112) de la paroi intérieure (111) qu'une deuxième zone (113) de la paroi intérieure (111) qui est adjacente à la première zone (112), **caractérisé en ce que**
la première zone (112) de la paroi intérieure (111) se raccorde au plan de séparation (12) et la deuxième zone (113) de la paroi intérieure (111) est sensiblement perpendiculaire au plan de séparation (12).

2. Corps de moule (10) selon la revendication 1, **caractérisé en ce que** le retrait et/ou l'apport de chaleur de la première zone (112) de la paroi intérieure (111) à la deuxième zone (113) de la paroi intérieure (111) diminue progressivement, et inversement.

3. Corps de moule (10) selon la revendication 1 ou 2, **caractérisé en ce que** le retrait de chaleur par l'au moins un canal de thermostatisation (30) à partir d'une chambre pour matière en excès (16) disposée dans la cavité de moule (11) et/ou adjacente à la cavité de moule (11), qui est réalisée dans le corps de moule (10) au niveau du plan de séparation (12) et est reliée à la cavité de moule (11) par une fente formée par un bord d'écrasement, est plus importante qu'à partir de la deuxième zone (112).

4. Corps de moule (10) selon l'une quelconque des revendications précédentes, **caractérisé en ce que** l'au moins un canal de thermostatisation (30) présente une section transversale non circulaire, en particulier une section transversale elliptique ou ovale, constante au moins dans une partie, dans lequel la partie est disposée tordue dans le corps de moule.

5. Corps de moule (10) selon l'une quelconque des revendications précédentes, **caractérisé en ce que** l'au moins un canal de thermostatisation (30) est produit au moins en partie dans un procédé de fabrication générative.

6. Corps de moule (10) selon l'une quelconque des revendications précédentes, **caractérisé en ce que** l'au moins un canal de thermostatisation (30) est disposé dans la zone de col et/ou zone d'épaulement (13) du corps de moule (10).

7. Corps de moule (10) selon l'une quelconque des revendications précédentes, **caractérisé en ce que** l'au moins un canal de thermostatisation (30) est disposé dans la zone de fond (14) du corps de moule (10).

8. Corps de moule (10) selon la revendication 3, **caractérisé en ce que** l'au moins un canal de thermostatisation (30) est disposé dans le corps de moule (10) dans la zone de la chambre pour matière en excès (16).

9. Corps de moule (10) selon l'une quelconque des revendications précédentes, **caractérisé en ce que** l'au moins un canal de thermostatisation (30) est disposé dans une zone de préhension.

10. Corps de moule (10) selon l'une quelconque des revendications précédentes, **caractérisé en ce qu'**une épaisseur de paroi entre l'au moins un canal de thermostatisation (30) et la paroi intérieure (111) correspondante et/ou le plan de séparation (12) et/ou la chambre pour matière en excès (16) est d'au moins 1,5 mm.

11. Corps de moule (10) selon la revendication 9, **caractérisé en ce que** le corps de moule (10) est réalisé en plusieurs parties et la zone de col/d'épaulement (13) et/ou la zone de fond (14) et/ou la zone de préhension sont réalisées séparément.

12. Corps de moule (10) selon la revendication 11, **caractérisé en ce que** l'au moins un canal de thermostatisation (30) est disposé dans la zone de col/épaulement (13) et la zone de col/épaulement (13) est produite dans le procédé de fabrication générative et/ou l'au moins un canal de thermostatisation (30) est disposé dans la zone de fond (14) et la zone de fond (14) est produite dans un procédé de fabrication générative et/ou l'au moins un canal de thermostatisation (30) est disposé dans la zone de préhension et la zone de préhension est produite dans un procédé de fabrication générative.

13. Corps de moule (10) selon l'une quelconque des revendications précédentes, **caractérisé en ce que** le corps de moule (10) présente une zone centrale (15) qui est fabriquée de manière conventionnelle et/ou générative.

14. Corps de moule (10) selon l'une quelconque des revendications précédentes, **caractérisé en ce que** l'au moins un canal de thermostatisation (30) présente une section transversale changeante le long de la direction d'écoulement.

15. Corps de moule (10) selon l'une quelconque des revendications précédentes, **caractérisé en ce que** l'au moins un canal de thermostatisation (30) présente un tracé courbé, en particulier courbé dans l'espace.

16. Corps de moule (10) selon l'une quelconque des revendications précédentes, **caractérisé en ce que** la zone de fond (14) et/ou la zone de col/d'épaulement (13) et/ou la zone centrale (15) et/ou la zone de préhension présentent un circuit de thermostatisation séparé.

17. Corps de moule (10) selon l'une quelconque des revendications précédentes, **caractérisé en ce que** l'au moins un canal de thermostatisation (30) présente au moins une section partielle commutée en parallèle.

18. Corps de moule (10) selon la revendication 5 ou 12, **caractérisé en ce que** le procédé de fabrication générative inclut un procédé de fusion laser sélective et un procédé de pulvérisation thermique.

19. Corps de moule (10) selon l'une quelconque des revendications 3 à 18, **caractérisé en ce que** la chambre pour matière en excès (16) présente alternativement des dents (40) et des canaux (41), dans lequel, lorsque les demi-moules de soufflage (2, 3) sont fermés, les dents de l'un des demi-moules de soufflage (2) sont opposées aux canaux de l'autre demi-moule de soufflage (3).

20. Moule de moulage par extrusion-soufflage (1) comprenant au moins un corps de moule (10) selon l'une quelconque des revendications 1 à 19.
